Europäisches Patentamt

**European Patent Office**

Office européen des brevets

(11) Publication number: **0 057 560**
**A2**

(19)

## (12) EUROPEAN PATENT APPLICATION

(21) Application number: **82300388.4**

(22) Date of filing: **26.01.82**

(51) Int. Cl.³: **F 16 L 33/22**

(30) Priority: **28.01.81 GB 8102646**

(71) Applicant: **DUNLOP LIMITED, Dunlop House Ryder Street St. James's, London SW1Y 6PX (GB)**

(43) Date of publication of application: **11.08.82 Bulletin 82/32**

(72) Inventor: **Litster, Craig James, 147 Buckingham Crescent, Bicester Oxon (GB)**

(84) Designated Contracting States: **AT BE CH DE FR IT LI LU NL SE**

(74) Representative: **Waller, Roy Ernest Sykes et al, Group Patent Department Dunlop Limited 2 Parade, Sutton Coldfield West Midlands B72 1PF (GB)**

(54) **Improvements in and relating to hose couplings.**

(57) A reusable hose coupling comprises an inner sleeve member (10) and a segmental outer sleeve member (11) for surrounding at least part of the inner sleeve member. The peripheral dimension of at least part (13) of the inner sleeve member increases progressively towards that end of the member which in use is inserted into the end of a hose (14), and the inner surface of the assembled segmental outer sleeve member is of a shape complementary to the outer surface of said part of the inner sleeve member. The inner surface of the assembled outer sleeve member has at least one serration (21) which extends in a direction generally transverse relative to the longitudinal axis of the coupling so as to tend readily to grip the outer surface of a hose and move with the hose in the event of the hose being pulled axially relative to the inner sleeve member. The grip exerted by the inner and outer sleeve members on the end of the hose therefore increases as the axial pull increases, and said grip is less dependent on the uniformity and tolerance of the hose wall thickness than is the case for a reusable coupling of conventional design.

1.

IMPROVEMENTS IN AND RELATING TO HOSE COUPLINGS

This invention relates to a hose coupling and in particular, though not exclusively, to a re-usable hose coupling for connecting a length of hose, such as a thin-walled layflat type irrigation hose, to rigid pipework or to another length of hose.

To secure together two lengths of hose or to connect a hose to fixed pipework use is made commonly of couplings of the kind having a serrated cylindrical inner body member which extends into the bore of the hose with the serrations bearing against the hose wall inner surface, and that inner body portion co-operating with an external sleeve or clamp means to grip the hose therebetween.

One known type of clamp means for securing the end of a hose to a serrated inner body member comprises a pair of semi-cylindrical shaped clamp valves which may be tightly bolted together so as to bear firmly against the hose and hold it tightly against the inner body. With carefully controlled dimensions of the outer diameter of the serrated cylindrical inner body member, inner diameter of the clamp halves, and hose wall thickness this arrangement can prove satisfactory. However, in practice difficulty is experienced often in obtaining a sufficiently high degree of production control of the dimensions, and in particular that of the hose wall thickness which will vary in a manner difficult to predict during the heat treatment of curable material commonly forming part of the hose. In consequence when clamped together the two clamp halves either fail to

2.

completely encircle the hose or come into contact without tightly gripping the hose, and in both cases leakage readily occurs. Furthermore the hose is liable to become nipped between and thus damaged by the clamp halves as they are brought together, and the high stress concentrations caused in some constructions by the manner in which the bolts act on the clamp halves requires the provision of thick and heavy components.

An alternative type of clamp means which overcomes the disadvantages of the above-described two-part clamp comprises an outer metal tube which extends around the hose and can be swaged to firmly compress the hose against the serrated inner body member. Although this form of clamp means is effective in avoiding leaks it is not convenient for many applications, such as irrigation hose, where the hose is often damaged in use and it is desired to replace the hose in situ without having also to replace the couplings which are relatively heavy and expensive.

Furthermore some uses of layflat type hose often result in it being subject to longitudinal loadings significantly in excess of those due to internal pressure within the hose. It is therefore important that the hose is firmly gripped by the end fitting so as to be able to withstand loadings greater than those due purely to the internal pressure obtained within the hose during service.

The present invention seeks to provide a hose coupling which is re-usable and which is capable of being clamped firmly to a hose.

In accordance with one aspect of the present invention a

3.

re-usable hose coupling comprises an inner sleeve member and a segmental outer sleeve member for surrounding at least part of said inner sleeve member, the peripheral dimension of at least part of the inner sleeve member increasing progressively towards one end of said member and the inner surface of the assembled segmental outer sleeve member being of a shape complementary to the outer surface of said part of the inner sleeve member and being formed with at least one serration which extends in a direction generally transverse relative to the longitudinal axis of the coupling.

Preferably the outer sleeve member is provided with a series of serrations spaced axially as considered relative to the longitudinal axis of the coupling. There may be a single serration which extends peripherally and axially, i.e. helically in the case of an inner surface of cylindrical shape, or there may be a series of axially spaced peripherally extending serrations.

Preferably the inner sleeve member is formed with a flange which extends radially outwardly from a region of the sleeve member remote from said one end. Said flange may have one or more abutment surfaces against which the segmental outer sleeve member and/or a hose end may be abutted during assembly of the coupling to a hose.

The invention provides also an assembly of a hose coupling as recited in the two preceding paragraphs and a hose an end of which is retained between the confronting surfaces of the inner and outer sleeve members.

The invention is particularly suitable for the coupling of thin walled hose of the layflat type and which is

4.

sufficiently flexible and deformable to be clamped between said confronting surfaces without creasing of the hose therebetween and consequential risk of leakage.

During construction of the afore described assembly the relative axial positioning of the inner and outer members, with the hose end therebetween, should be such that the hose wall is subject to only a small level of compressive force. Thus, correspondingly, there results only a small level of hoop stress in the segments of the outer sleeve member when initially brought together to form the outer sleeve member. Also because the segments are brought together without causing any substantial compression of the hose wall there is no substantial risk of the hose wall being nipped between adjacent segments and thereby weakened.

The above-described preferred feature of an inner sleeve member having a flange formed with abutment surfaces(s) is particularly useful for obtaining the required relative axial positioning of the sleeve members.

Preferably the serrations are in the form of notches cut, or formed during moulding, in the inner surface of the segments. In this case the radial spacing of the inner and outer sleeve members on initial assembly preferably is very slightly less than the thickness of the hose wall when in an unstressed condition.

Alternatively, the serrations may be in the form of ridges protruding from the inner surfaces of the segments, and in this case the radial spacing of the inner and outer sleeve members during initial assembly preferably is equal

5.

to or only very slightly greater than the thickness of the hose wall when in an unstressed condition.

The serrations, whether in the form of notches or ridges, should be of a construction which causes them to readily grip the hose wall. Accordingly when axial load is applied to the hose the segmental outer sleeve member tends to move therewith. In consequence the spacing between the inner and outer sleeve members decreases and the hose wall is simultaneously subjected to a compressive force, which increases with axial load, and ensures a firm friction grip between the sleeve members and hose to prevent separation thereof.

Preferably the confronting surfaces of the sleeve members are of a circular shape in cross-section, and more preferably said surfaces are of a frusto-conical shape. Alternatively, however, said surfaces may be of a non-circular cross-sectional shape.

Where the surfaces are of a frusto-conical shape it is preferred that the cone apex angle of said surfaces is in the range 1 to 10$^o$, more preferably 2 to 6$^o$.

To ensure that the coupling can grip satisfactorily against the hose, and without any risk of tearing of the hose wall material, it is preferred that the axial length of the confronting surfaces of the sleeve members is not less than a third of the minimum peripheral dimension of that confronting surface presented by the inner sleeve member.

In the case of a construction in which the inner sleeve member is provided with the afore described flange having one or more abutment surfaces, said flange may serve also for

6.

connection of the coupling to another hose, rigid pipework or machinery.

The segments of the outer sleeve member may be secured together by bolts passing through openings formed by said segments, or external clamping means may be provided. In a further variation the segments may be secured together by a tubular sleeve, such as a tube of uniform cross-section along its length, the tubular sleeve being slid into position over the segments after they have been brought together, around the hose end to form the outer sleeve member.

One embodiment of the invention will now be described, by way of example, with reference to the accompanying diagrammatic drawings in which:

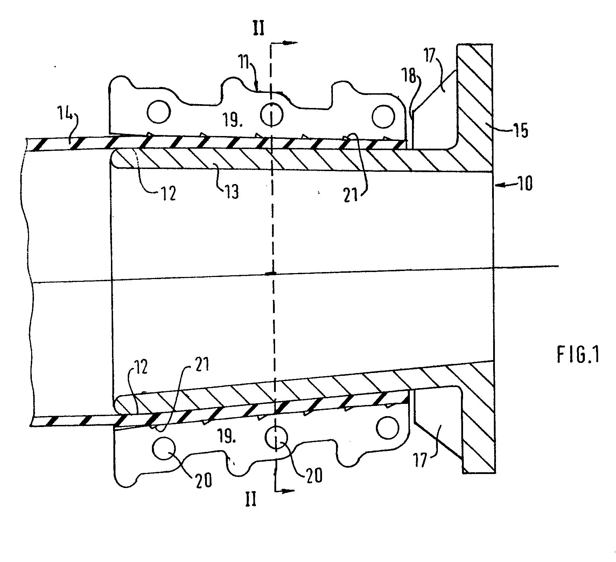

Figure 1 is a longitudinal sectional view of a coupling in accordance with the present invention in combination with a hose end;

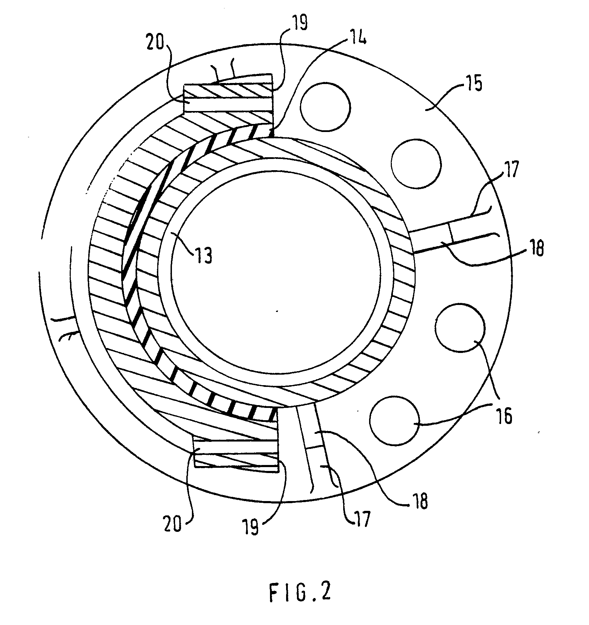

Figure 2 is a cross-sectional view on the line II-II of Figure 1, the right-hand part showing only the inner sleeve member, and

Figure 3 shows in longitudinal cross-section a part of the coupling of Figure 1.

A hose coupling comprises an inner sleeve member 10, and an outer segmental sleeve member 11 each of circular cross-sectional shape. Each sleeve member is formed of a high-strength glass filled nylon material, said material preferably comprising a mixture of 60% of glass filaments and 40% of nylon 6/12.

The inner sleeve member 10 has a first portion 13

7.

for insertion into the end of a hose 14. The outer surface of the portion 13 is of a generally frusto-conical shape, said surface lying at an angle of 3$^{\circ}$ to the longitudinal axis of the sleeve, but has a cylindrical outer surfaced end portion 12 at the larger end of the portion 13 to minimise any undesirable stress concentrations on the hose 14. Adjoining and integral with the smaller end of portion 13 the inner sleeve member has a second portion in the form of a radially outwardly extending flange 15. The flange 15 is provided with a series of circumferentially spaced openings 16 by which it may be bolted to the flange of another coupling, and four reinforcing webs 17 are provided, uniformly circumferentially spaced, between the flange portion 15 and the outer surface of the tubular first portion 13. Each reinforcing web has an abutment surface 18 lying in a plane perpendicular to the longitudinal axis of the sleeve and facing away from the flange portion 15. Each abutment surface 18 is of sufficient radial extent so as to provide axial alignment for the outer segmental sleeve member 11 which will now be described in more detail.

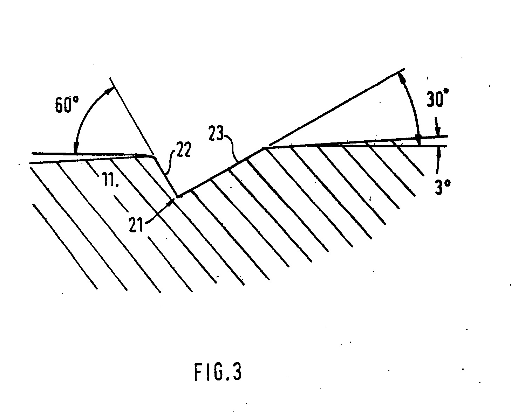

The outer segmental sleeve member 11 comprises two identical semi-cylindrical portions which are held together at their confronting surfaces 19 by means of bolt holes 20. When assembled together the outer sleeve member has an inner surface of frusto-conical shape and which lies at an angle of 3$^{\circ}$ to the longitudinal axis of the sleeve. The inner surface of the outer sleeve member 11 has a series of circumferentially extending notches 21 provided at intervals

8.

along the length thereof. Figure 3 shows a notch 21 in more detail. That side of each notch which in the assembled outer sleeve member lies nearest the sleeve end of maximum internal diameter has an abutment face 22 angled at $60^{\circ}$ relative to the longitudinal direction of the sleeve. The other side of the notch has a lead-in surface 23 angled at $30^{\circ}$ to said longitudinal direction.

In use of the coupling to grip the end of the hose 14 the first portion 13 of the inner sleeve member 10 is inserted into the end of the hose sufficiently far for the hose end to abut the surfaces 18 of the reinforcing webs 17. The two segments of the outer sleeve member 11 are then placed around the hose end, with end faces of the segments in contact with the abutment surfaces 18, and the two segments are secured together by six stainless steel bolts in holes 20. At this stage of initial assembly the hose wall material between the sleeve members is not subject to any substantial degree of compression although the notches 21 ensure that the hose cannot readily slip in an axial direction relative to the outer member. In addition, in the initially assembled condition no substantial hoop stresses exist in the segments of the outer sleeve member, and there are no stress concentrations such as would arise due to bending moments if the bolts acted to tightly grip the segments to the hose.

Subsequently, either during use of the assembly so formed or as a later part of the assembly procedure, the hose 14 is loaded axially, either by external loads or

9.

internal pressure, relative to the inner sleeve member 10. The resulting tendency of the hose to move axially relative to the inner sleeve member is resisted by virtue of the simultaneous movement of the outer sleeve member, which is restrained from sliding relative to the hose by virtue of the notches, and the consequential reduction in the radial spacing of the two sleeve members. The greater the axial loading applied to the hose 14 the greater is the compressive force exerted on the hose wall material due to the relative axial movement of the two sleeve members, and there thus results a progressively increasing grip of the hose.

Although the outer segmental sleeve member requires to be sufficiently robust to withstand the hoop stresses resulting from relative axial movement of the two members with the hose therebetween, they are not additionally required to withstand the hoop and bending stresses which would arise if, in contrast, the segments were required to be tightly clamped around the hose and inner member during initial assembly. A saving in materials and weight of the outer sleeve member thereby results.

Furthermore, because the peripheral dimension of at least part of the inner sleeve member, and also a confronting surface of the outer sleeve member, increases progressively towards that end of the inner member which inserted into a hose, it is found that, in contrast to a conventional coupling in which the confronting surfaces are parallel with the coupling axis, the grip exerted by the coupling on the hose is substantially less dependent on the uniformity and tolerance of the hose wall thickness.

0057560

10.

The design of the coupling allows it to be readily assembled in situ and without requiring specialised or heavy equipment.

In an alternative embodiment of the invention in which the segments of the outer sleeve member are secured together around the hose end by means of a tubular sleeve instead of bolts the method of assembly is substantially similar to that above described in respect of the first embodiment except that the tubular sleeve is first slid a short distance along the length of the hose before insertion of the inner sleeve member. After subsequent insertion of the inner sleeve member in the hose end and positioning of the outer sleeve segments around the hose, the tubular sleeve is then slid over the segments to hold them lightly against the outer surface of the hose end. The tubular sleeve may then be retained in position against inadvertent displacement, by means of a retention screw or other suitable means. Alternatively with the tubular sleeve held temporarily in the required position an axial load may be applied to the hose to cause slight axial movement of the inner sleeve member relative to the other components of the assembly and in consequence firmly lock the tubular sleeve in position relative to the outer sleeve segments and hose.

The confronting surfaces of the two sleeve members provide a large surface area across which high load, particularly high longitudinal loads, may effectively be transferred between the hose and coupling.

11.

CLAIMS:

1.     A reusable hose coupling characterised in that it comprises an inner sleeve member (10) and a segmental outer sleeve member (11) for surrounding at least part of said inner sleeve member, the peripheral dimension of at least part (13) of the inner sleeve member increasing progressively towards one end of said member and the inner surface of the assembled segmental outer sleeve member being of a shape complementary to the outer surface of said part of the inner sleeve member and being formed with at least one  serration (21) which extends in a direction generally transverse relative to the longitudinal axis of the coupling.

2.     A reusable hose coupling according to claim 1 characterised in that the inner sleeve member (10) comprises a flange (15) which extends radially outwardly from a region of the sleeve member remote from said one end.

3.     A reusable hose coupling according to claim 2 characterised in that said flange (15) comprises at least one abutment surface (18) against which the segmental outer sleeve member (11) and the end of a hose (14) may be abutted.

4.     A reusable hose coupling according to any one of the preceding claims characterised in that the confronting surfaces of the sleeve members (10, 11) are of a circular shape in cross-section.

5.     A reusable hose coupling according to claim 4 characterised in that said surfaces are of a frusto-conical

12.

shape.

6.  A reusable hose coupling according to claim 5 characterised in that the cone apex angle of said surfaces is in the range $1^{\circ}$ to $10^{\circ}$.

7.  A reusable hose coupling according to claim 6 characterised in that the cone apex angle is in the range $2^{\circ}$ to $6^{\circ}$.

8.  A reusable hose coupling according to any one of the preceding claims characterised in that the axial length of the confronting surfaces of the sleeve members (10,11) is not less than a third of the minimum peripheral dimension of that confronting surface presented by the inner sleeve member.

9.  A reusable hose coupling according to any one of the preceding claims characterised in that it comprises a tubular sleeve for positioning around the assembled segmental outer sleeve member.

10.  A hose assembly characterised in that it comprises in combination a coupling according to any one of the preceding claims and a thin walled hose of the layflat type arranged with an end portion thereof clamped between confronting surfaces of the inner and outer sleeve members.

11.  A hose assembly according to claim 10 characterised in that the inner sleeve member (10) is formed with a flange (15) and wherein the spacing between the inner and outer sleeve members on initial assembly with the segmental outer sleeve member abutting said flange is substantially equal to the thickness of the hose wall.

13.

12.    A hose assembly according to claim 10 characterised in that the segmental outer member is formed with at least one serration in the form of a notch and wherein said spacing of the inner and outer sleeve members is slightly less than the thickness of the hose wall when in an unstressed condition.

13.    A hose assembly according to claim 10 characterised in that the outer sleeve member is formed with at least one serration in the form of a ridge and wherein the spacing of the inner and outer sleeve members on initial assembly is equal to or only slightly greater than the thickness of the hose wall.

FIG.1

2/3

FIG.2

0057560

FIG.3